# EUROPEAN PATENT APPLICATION

(11) **EP 4 310 988 A2**
(43) Date of publication of application: **24.01.2024**
(21) Application number: 23187033.8
(22) Date of filing: 21.07.2023
(51) Int. Cl.: H01M 10/42, H01M 10/48, H01M 50/271, H01M 50/284, H01M 50/507, H01M 50/569

(54) **BATTERY MODULE AND BATTERY PACK INCLUDING BATTERY MODULE**

(30) Priority: 21.07.2022 KR 20220090578
(71) Applicant: SK On Co., Ltd., Seoul 03161 (KR)
(72) Inventor: LEE, Jae Hee, 34124 Daejeon (KR); KANG, Min Song, 34124 Daejeon (KR); KANG, Ji Eun, 34124 Daejeon (KR); PAK, Byeong Jun, 34124 Daejeon (KR); SUNG, Ki Bum, 34124 Daejeon (KR); HAN, Jin Su, 34124 Daejeon (KR)
(74) Representative: Bird & Bird LLP

(57) **Abstract**

A battery module and a battery pack including the same are disclosed.

In some implementations, the battery module may include a plurality of battery cells; and a cell monitoring portion connected to the plurality of battery cells, the cell monitoring portion including a plurality of boards collecting information on at least one of temperature, current, and voltage of the plurality of battery cells. The plurality of boards may be separable.

## Description

### TECHNICAL FIELD

The present disclosure relates to a battery module and a battery pack including the same.

### BACKGROUND

Secondary batteries have been widely used not only in small-sized electronic devices such as mobile phones and laptops, but also in mid-to-large-sized machinery such as electric vehicles (EVs), and have the advantage of being rechargeable and reusable.

Such a secondary battery may be manufactured by accommodating an electrode assembly including an anode plate, a cathode plate, and a separator in an exterior material, injecting an electrolyte into the exterior material, and then sealing the exterior material.

A battery module may be configured by stacking a plurality of secondary batteries, and a battery pack may be formed by collecting a plurality of battery modules.

A battery module or battery pack may be equipped with a system for measuring temperature, current, and voltage states of a plurality of secondary batteries and controlling the secondary batteries based on the measured data.

Various printed circuit boards may be used to build such a system. Such printed circuit boards may be assembled in a battery module or battery pack, and may be separated from the battery module or battery pack for maintenance or may be replaced with a new one, if necessary.

Accordingly, it is very important to efficiently arrange such printed circuit boards in a battery module or battery pack. And it is very important to efficiently arrange such printed circuit boards in a battery module or battery pack in terms of post management of the battery module or battery pack.

### Related Art Document

### Patent Document

Patent Document 1: Korea Patent Publication No. 10-2021-0094394 (July 29, 2021)

### SUMMARY

An aspect of the present disclosures may provide a battery module or battery pack with improved the manufacturing efficiency.

An aspect of the present disclosures may provide a battery module or battery pack with improved the efficiency of an assembly operation and maintenance operation of a printed circuit board mounted on a battery module or battery pack.

In some embodiments of the present disclosures, a battery module may include a plurality of battery cells, and a cell monitoring portion connected to the plurality of battery cells, the cell monitoring portion including a plurality of boards collecting information on at least one of temperature, current, and voltage of the plurality of battery cells. The plurality of boards may be separable.

The plurality of boards may be configured to be attachable to and detachable from each other.

The cell monitoring portion may include a first board connected to the plurality of battery cells, the first board collecting information on at least one of temperature, current, and voltage of the plurality of battery cells, and a second board connected to the first board, the second board transmitting information received from the first board to a controller. The second board may be configured to be attachable to and detachable from the first board in a direction, parallel to the first board.

The second board may be configured to be attachable to and detachable from the first board in a height direction of the plurality of battery cells.

The cell monitoring portion may further include a connector connecting the first board and the second board to each other.

The connecting unit may include a first connector connected to the first board, and a second connector connected to the second board. The first connector and the second connector may be coupled to each other in an insertion coupling with fit tolerance.

The cell monitoring portion may include a first cell monitoring portion disposed on one side of the plurality of battery cells, and a second cell monitoring portion connected to the first cell monitoring portion, the second cell monitoring portion disposed on the other side of the plurality of battery cells.

The battery module may further include a case accommodating the plurality of battery cells, the first board, and the second board. The case may include an accommodation groove in which the first board and the second board are accommodated, and an entrance connecting the accommodation groove to the outside of the case. At least one of the first board and the second board may be provided to be extracted through the entrance.

The case may include at least one plate member covering the plurality of battery cells. The accommodation groove and the entrance may be formed in the plate member.

The plate member may further include a temperature sensor disposed on one surface of the plate member opposing an outermost battery cell of the plurality of battery cells, the temperature sensor measuring temperature of the outermost battery cell.

The temperature sensor may include a first temperature sensor in contact with a first region of the outermost battery cell, and a second temperature sensor in contact with a second region of the outermost battery cell.

The first region may be a region of the outermost battery cell having a highest average temperature. The second region may be a region of the outermost battery cell having a lowest average temperature.

The plate member may further include a temperature measurement hole formed as a through-hole. The temperature sensor may be disposed to oppose the temperature measurement hole and may be exposed in a direction of the battery cell.

The plate member may further include a cover member covering the accommodation groove.

The battery module may further include a busbar assembly disposed between the plate member and an electrode lead of each of the plurality of battery cells. The busbar assembly may be connected to the electrode lead and the first board.

According to another aspect of the present disclosures, a battery pack may include the battery module.

In some embodiments of the present disclosures, the battery pack may include a pack housing, and a battery module disposed in the pack housing, the battery module including a plurality of battery cells and a cell monitoring portion connected to the plurality of battery cells, the cell monitoring portion including a plurality of boards collecting information on at least one of temperature, current, and voltage of the plurality of battery cells, wherein the plurality of boards are separable.

The battery pack may further include a wireless communication portion disposed in the pack housing, the wireless communication portion connecting the cell monitoring portion and a controller, the controller receiving the information collected by the cell monitoring portion.

The wireless communication portion may include a wireless chipset connected to the cell monitoring portion, the wireless chipset receiving the information from the cell monitoring portion, and an antenna connected to the wireless chipset, the antenna transmitting the information to the controller.

The battery pack may further include a pack cover member connected to the pack housing, the pack cover member covering the battery module.

The pack cover member may include a protruding region protruding in a direction away from the wireless communication portion.

An internal surface of the protruding region may be spaced apart from the battery module.

The battery pack may further include an antenna hole formed in a case accommodating the plurality of battery cells, the cell monitoring portion, and the wireless communication portion, the antenna hole exposing at least a portion of the antenna to the outside of the case.

According to an aspect of the present disclosures, the manufacturing efficiency of a battery module or battery pack may be improved.

In addition, according to an aspect of the present disclosures, the efficiency of an assembly operation and maintenance operation of a printed circuit board, mounted on a battery module or battery pack, may be improved.

### BRIEF DESCRIPTION OF DRAWINGS

Certain aspects, features, and advantages of the present disclosures are illustrated by the following detailed description with reference to the accompanying drawings.
FIG. 1 is a partial cross-sectional view of a battery module according to an embodiment of the present disclosures.
FIG. 2 schematically illustrates a battery module according to another embodiment of the present disclosures.
FIG. 3 schematically illustrates a first board and a second board according to an embodiment of the present disclosures.
FIG. 4 is a perspective view of a cell monitoring portion according to an embodiment of the present disclosures.
FIG. 5 is an exploded perspective view of a battery module according to an embodiment of the present disclosures.
FIG. 6 is a partially enlarged view of a battery module according to another embodiment of the present disclosures.
FIG. 7 is an exploded perspective view of a battery module according to another embodiment of the present disclosures.
FIG. 8 is a perspective view of an auxiliary plate and a second plate member according to an embodiment of the present disclosures.
FIG. 9 is a perspective view of a first plate member according to an embodiment of the present disclosures.
FIG. 10 illustrates the interior of a first plate member and a module housing of an embodiment of the present disclosures.
FIG. 11 is a partially exploded perspective view of a battery module according to another embodiment of the present disclosures.
FIG. 12 is a partially exploded perspective view of a battery pack according to an embodiment of the present disclosures.
FIG. 13 is a front view of a first cell monitoring portion applied to a battery pack according to an embodiment of the present disclosures.
FIG. 14 is a partially exploded perspective view of a battery module applied to a battery pack according to another embodiment of the present disclosures.
FIG. 15 is a front view of a portion of a battery pack according to another embodiment of the present disclosures.
FIG. 16 is a front view of a portion of a battery pack according to another embodiment of the present disclosures.

### DETAILED DESCRIPTION

Features of the present disclosures in this patent document are described by embodiments with reference to the accompanying drawings.

Hereinafter, the present disclosures will be described in detail with reference to the accompanying drawings.

In the accompanying drawings, an X-axis is a length direction of a battery cell, a Y-axis is a thickness direction of the battery cell, and a Z-axis is a height direction of the battery cell. However, the above-described axes are directions that are arbitrarily set for ease of description, and may be changed according to specifications of a battery module and a battery pack.

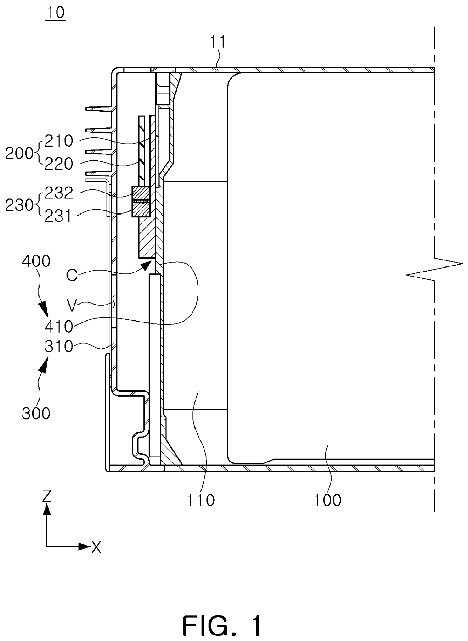

FIG. 1 is a partial cross-sectional view of a battery module 10 according to an embodiment of the present disclosures .

As illustrated in FIG. 1, the battery module 10 according to an embodiment of the present disclosures may include a plurality of battery cells 100 accommodated in a module housing 11, an electrode lead 110 connected to an electrode assembly accommodated in the plurality of battery cells 100, and to be extracted to the outside of the plurality of battery cells 100, and a cell monitoring portion 200 measuring and collecting information on at least one of temperature, current, and voltage of the plurality of battery cells 100.

The plurality of battery cells 100 may be stacked in a thickness direction thereof to form the battery module 10. The electrode lead 110 of each of the plurality of battery cells 100 may be connected to a busbar assembly 400, and the plurality of battery cells 100 may be connected to each other by the busbar assembly 400 to form a module. In an embodiment of the present disclosures, the busbar assembly 400 may include a busbar member 410 welded to the electrode lead 110.

The electrode lead 110 may be extracted from at least one electrode among a positive electrode and a negative electrode of the electrode assembly. On the other side of the electrode lead 110, that is, in a region not illustrated in FIG. 1, another electrode lead extracted from the at least one electrode (not illustrated) among the positive electrode and the negative electrode of the electrode assembly may be present.

The cell monitoring portion 200 may include a plurality of boards 210 and 220, and at least one board 210, among the plurality of boards 210 and 220, may be connected to the busbar member 410. A welding method may be adopted to connect the board 210 to the busbar member 410, and a connection region C between the busbar member 410 and the board 210 may be a welding region. However, such a configuration is not limited by the present disclosures, and the board 210 may be fixed to a housing of the battery module 10, and the board 210 may be fixed using other methods such as bolting and the like, rather than welding.

In an embodiment of the present disclosures, the board 210 connected to the busbar member 410, among the plurality of boards 210 and 220, may include at least one sensing terminal. The sensing terminal may be connected to the busbar member 410 through a coupling member such as a bolt or the like.

The board 210, connected to the busbar member 410, may be a board for measuring and collecting information on at least one of current and voltage of the battery cell 100 through the sensing terminal. In an embodiment of the present disclosures, the plurality of boards 210 and 220 may be a printed circuit board (Printed Circuit Board, PCB) or a flexible printed circuit board (Flexible Printed Circuit Board, FPCB).

The plurality of boards 210 and 220 may be separable, and may be provided to be attachable to and detachable from each other. One board 220, among the plurality of boards 210 and 220, may be provided to be attachable to and detachable from the other board 210 in a direction, parallel to the other board 210.

In an embodiment, a direction of attachment and detachment, a direction in which the plurality of boards 210 and 220 are attached to and detached from each other, may be configured as a direction other than a stacking direction of the plurality of battery cells 100. One of directions other than the stacking direction of the plurality of battery cells 100, may be a direction, perpendicular to the stacking direction of the plurality of battery cells 100.

The plurality of boards 210 and 220 may be provided to be separated from or coupled to each other in a Z-axis direction, a height direction of the battery cell 100 other than the stacking direction of the battery cell 100. In this case, the Z-axis direction may be a direction, perpendicular to a Y-axis, the thickness direction and the stacking direction of the battery cell 100. According to such a configuration, when an operation of coupling or separating the plurality of boards 210 and 220 to each other or from each other is performed, it is possible to prevent the operation from affecting a state in which the battery cell 100 is stacked or the operation from being affected by the state in which the battery cell 100 is stacked.

In addition, according to such a configuration, when maintaining or replacing, with a new board, a board, reaching the end of lifespan thereof or having a problem, among the plurality of boards 210 and 220, only the board 210 or 220 having a problem may be removed from the battery module 10 without disassembling the entire battery module 10. According to the present disclosures, the efficiency of a maintenance operation of the boards 210 and 220 may be improved.

In addition, according to the present disclosures, when the battery module 10 is manufactured, an operation of assembling the boards 210 and 220 to the battery module 10 may be completed simply by coupling, to each other, the plurality of boards 210 and 220 in a separated state, thereby improving the assembly efficiency and manufacturing efficiency of the battery module 10.

In this case, as described above, a direction of attachment and detachment between the plurality of boards 210 and 220 may be a direction other than the stacking direction of the battery cell 100, such that the progress of an operation of stacking the battery cell 100 or whether the stacking operation is completed may not affect the assembly operation of the boards 210 and 220, contributing to improving the assembly convenience and manufacturing efficiency of the battery module 10.

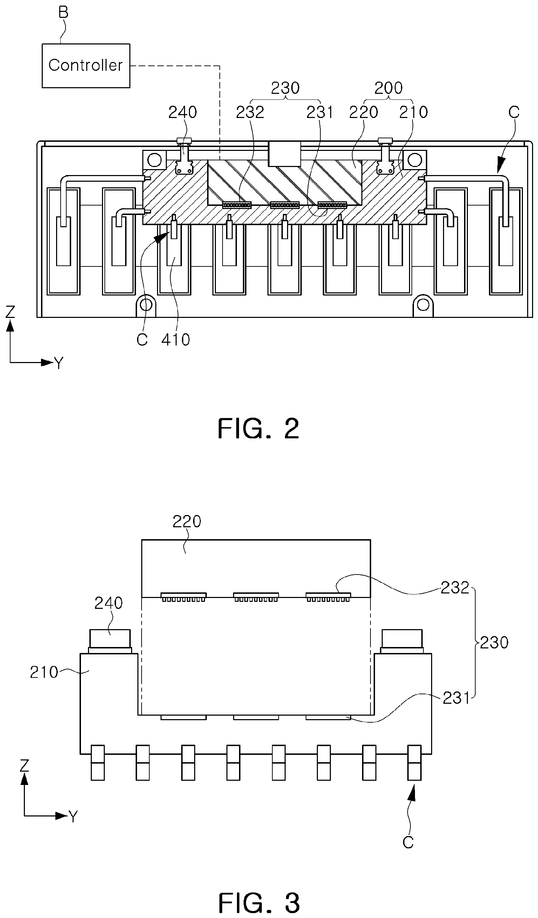

Among the plurality of boards 210 and 220, one board 210 connected to the busbar member 410 may collect information on at least one of current and voltage of the battery cell 100. The other board 220, unconnected to the busbar member 410, may receive the information collected by the board 210 and transmit the information to a controller (B in FIG. 2), controlling the battery module 10.

In an embodiment of the present disclosures, the cell monitoring portion 200 may include a first board 210, and a second board 220 connected to the first board 210 and provided to be attachable to or detachable from the first board 210.

The first board 210 may be connected to the electrode lead 110 of the battery cell 100 through the busbar member 410, and may collect information on at least one of current and voltage of the battery cell 100.

In addition, the second board 220 may be connected to the first board 210, and may transmit information received from the first board 210 to the controller (B in FIG. 2). In an embodiment of the present disclosures, at least one of the first board 210 and the second board 220 may include a cell monitoring unit (CMU) . For example, the cell monitoring unit (CMU) may be disposed in at least one of the first board 210 and second board 220 to occupy a partial region of the first board 210 and the second board 220. The cell monitoring unit (CMU) may contain a plurality of sensors connected to the battery cell 100. However, it is an embodiment, and is not necessarily limited by the present disclosures.

In an embodiment of the present disclosures, the first board 210 may be connected to at least one of a temperature measuring device, a current measuring device, and a voltage measuring device, connected to the battery cell 100, and may store information received from the devices. According to such a configuration, information on at least one of temperature, current, and voltage data of the battery cell 100 may be easily collected.

The second board 220 may receive information on temperature, current, and voltage of the battery cell 100 from the first board 210, and may be provided to transmit the received information to the controller (B in FIG. 2).

In an embodiment of the present disclosures, the controller (B in FIG. 2) may include a battery monitoring unit (BMU) or a battery management system (BMS), and the second board 220 may be provided to perform wired or wireless communication with the controller (B in FIG. 2).

The controller (B in FIG. 2) may be provided to receive the information on temperature, current, and voltage of the battery cell 100 through the second board 220, and may be provided to transmit a control signal capable of controlling temperature, current, and voltage of the battery cell 100. The battery cell 100 may be controlled by a control signal transmitted by the controller (B in FIG. 2).

FIG. 2 schematically illustrates a battery module 10 according to another embodiment of the present disclosures.

As illustrated in FIG. 1 and FIG. 2, a plurality of battery cells (100 in FIG. 1) may be stacked in a thickness direction of the battery cell (100 in FIG. 1), that is, a Y-axis direction. An electrode lead (110 in FIG. 1) of the battery cell (100 in FIG. 1) may be extracted to one side surface of the battery cell (100 in FIG. 1) and the other side surface of the battery cell (100 in FIG. 1), opposing the one side surface.

A connection region C, a region in which the electrode lead (110 in FIG. 1) of each of the plurality of battery cells (100 in FIG. 1) and a first board 210 are connected to each other, may be formed by welding.

The first board 210 may be disposed on an upper portion of each of the battery cell 100, and may be welded to a busbar member (410 in FIG. 1). In another embodiment of the present disclosures the first board 210 and the busbar member (410 in FIG. 1) may be coupled by an adhesive, a bolt, or the like.

A second board 220 may be provided to be separated from the first board 210 or coupled to the first board 210. A connector 230 may be provided on the first board 210 and the second board 220 to enable attachment and detachment between the first board 210 and the second board 220.

The connector 230 may include a first connector 231 connected to the first board 210. In addition, the connecting unit 230 may include a second connector 232 engaged with the first connector 231 and connected to the second board 220.

When the first connector 231 and the second connector 232 are coupled to each other, the first board 210 and the second board 220 may be connected to each other. When the first connector 231 and the second connector 232 are separated from each other, the first board 210 and the second board 220 may be separated from each other.

An operation of attachment and detachment between the first connector 231 and the second connector 232 may be performed in a height direction of the battery cell 100, that is, a Z-axis direction. A direction of attachment and detachment between the first connector 231 and the second connector 232 may be set as a direction other than a stacking direction of the battery cell 100, that is, a Y-axis direction, such that the entire battery modules 10 may not need to be separated from each other. Only the second board 220 and the first board 210 may be separated from each other.

FIG. 3 schematically illustrates a first board 210 and a second board 220 according to an embodiment of the present disclosures.

As illustrated in FIG. 3, a first connector 231 and a second connector 232 may be provided to be coupled to each other in an insertion coupling with fit tolerance. The first board 210 and the second board 220 may be connected to each other by inserting the second connector 232 into the first connector 231. The first board 210 and the second board 220 may be separated from each other by separating the second connector 232 from the first connector 231, contributing to shortening time required for an operation of connecting or separating the first board 210 and the second board 220 to each other. The standards and specifications of the first connector 231 and the second connector 232 are not necessarily limited by the present disclosures, and may be appropriately selected and applied according to the standards and specifications of a battery module 10.

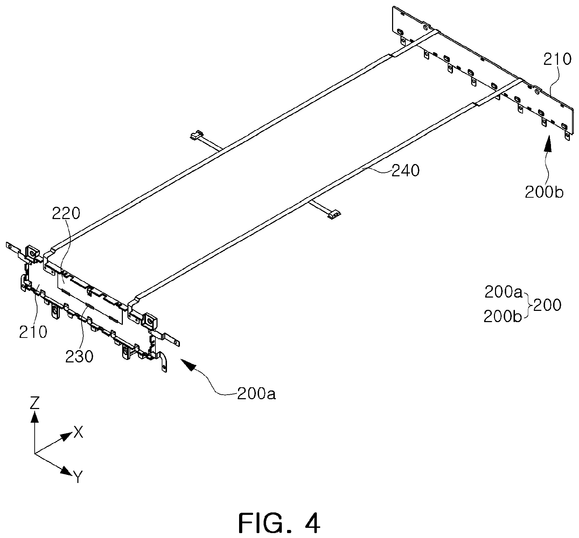

FIG. 4 is a perspective view of a cell monitoring portion 200 according to an embodiment of the present disclosures.

As illustrated in FIG. 4, in an embodiment of the present disclosures, a cell monitoring portion 200 may include a first cell monitoring portion 200a and a second cell monitoring portion 200b connected to the first cell monitoring portion 200a.

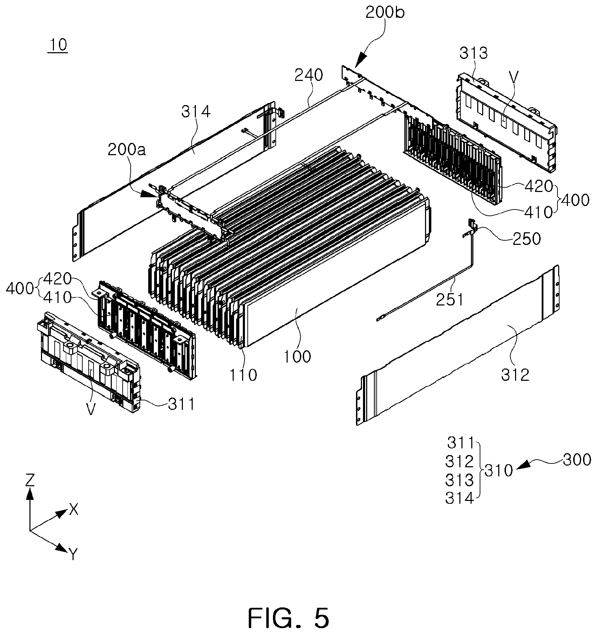

The first cell monitoring portion 200a may be provided to oppose an electrode lead (110 in FIG. 5) of one side of a battery cell (100 in FIG. 5). The second cell monitoring portion 200b may be provided to oppose an electrode lead (110 in FIG. 5) of the other side of the battery cell (100 in FIG. 5) . The first cell monitoring portion 200a and the second cell monitoring portion 200b may be connected to each other by a connection member 240.

The connection member 240 may serve to structurally and electrically connect the first cell monitoring portion 200a and the second cell monitoring portion 200b to each other.

In an embodiment of the present disclosures, the connection member 240 may extend in a length direction of the battery cell (100 in FIG. 5). The connection member 240 may be a FPCB, a flexible flat cable (FFC), a ribbon, a cable, a wire, or the like.

In an embodiment of the present disclosures the first cell monitoring portion 200a may include a first board 210 and a second board 220 attached to and detached from the first board 210, and the second cell monitoring portion 200b may include only the first board 210. The first board 210 may be connected to the battery cell (100 in FIG. 5) to receive information on temperature, current, and voltage of the battery cell (100 in FIG. 5). The second board 220 may receive, from the first board 210, information on temperature, current, and voltage of the battery cell (100 in FIG. 5), and transmit the information to a controller (B in FIG. 2).

In another embodiment of the present disclosures, the second cell monitoring portion 200b may also include a first board 210 connected to the battery cell (100 in FIG. 5) and a second board 220 provided to be attachable to or detachable from the first board 210. However, such a configuration is not necessarily limited by the present disclosures, and may be appropriately selected and applied according to the standards, specifications, and use environments of a battery module 10.

FIG. 5 is an exploded perspective view of a battery module 10 according to an embodiment of the present disclosures .

As illustrated in FIG. 5, a plurality of battery cells 100 may be stacked in a thickness direction thereof, that is, a Y-axis direction.

A case 300 may be provided on the outside of the plurality of stacked battery cells 100, and the case 300 may accommodate the plurality of battery cells 100, a first board 210 connected to the battery cell 100, and a second board 220 attached to and detached from the first board 210.

The case 300 may include a plurality of plate members 310 surrounding the battery cell 100. In an embodiment of the present disclosures, the plate member 310 may include a first plate member 311, a second plate member 312, a third plate member 313, and a fourth plate member 314, surrounding the outside of the battery cell 100.

The first plate member 311 may oppose an electrode lead 110 of one side of the battery cell 100, and the third plate member 313 may oppose an electrode lead 110 of the other side of the battery cell 100. The electrode lead 110 of the one side of the battery cell 100 and the electrode lead 110 of the other side of the battery cell 100 may be connected to a busbar member 410, respectively.

In addition to the busbar member 410, an insulating cover, an insulating sheet, and a heat-resistant sheet may be provided between the case 300 and the battery cell 100, and the insulating cover, the insulating sheet, and the heat-resistant sheet may serve to insulate the case 300 and the battery cell 100 from each other, suppress the occurrence of fire in the battery module 10, and suppress the propagation of flames in the battery module 10.

In an embodiment of the present disclosures, the first plate member 311, the second plate member 312, the third plate member 313, and the fourth plate member 314 may include a material having at least one physical property, among heat resistance, fire resistance, and elasticity.

A temperature sensor 250 may be provided between an outermost battery cell 100, among the plurality of stacked battery cells 100, and the second plate member 312. The temperature sensor 250 may be attached to the second plate member 312 using a tape. However, such a configuration is not necessarily limited by the present disclosures. In addition to the method using the tape to fix the temperature sensor 250, various adhesion methods may be applied.

The temperature sensor 250 may be connected to at least one of the first cell monitoring portion 200a and the second cell monitoring portion 200b, or may be directly connected to a controller (B in FIG. 2).

A temperature sensor connector 251 may be used to connect the temperature sensor 250 to at least one of the first cell monitoring portion 200a and the second cell monitoring portion 200b. The temperature sensor connector 251 may be provided as a wire, and may be provided as an FPC(Flexible Printed Circuit) -type, an FFC (Flexible Flat Cable) -type, or the like, in addition to a general wire. The temperature sensor connector 251 may be soldered on a first board (210 in FIG. 4) or connected to the first board (210 in FIG. 4) through another connector. However, such a configuration is not limited by the present disclosures, and may be appropriately selected and applied according to the specifications and use environments of the battery module 10.

In an embodiment of the present disclosures, the first plate member 311 and the third plate member 313 may oppose a busbar frame 420, respectively. A plurality of busbar members 410 may be fixed to the busbar frame 420, and a busbar venting hole for discharging venting gas generated in the battery cell 100 may be provided in the busbar frame 420.

The first plate member 311 and the third plate member 313 may have a venting hole V opposing the busbar member 410, respectively. Accordingly, the venting gas generated in the battery cell 100 may be discharged to the outside of the battery module 10 through the busbar venting hole and the venting hole V.

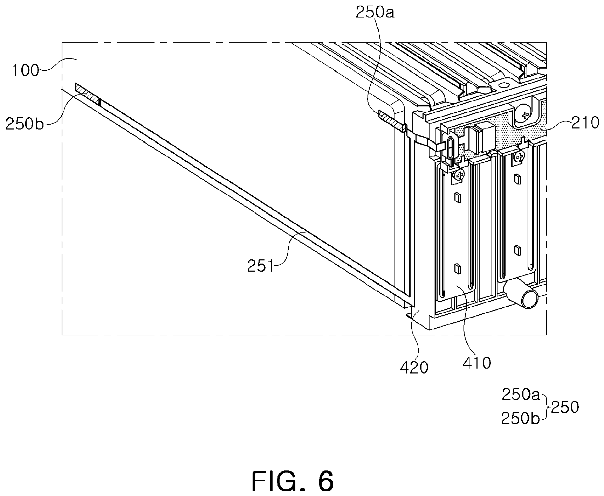

FIG. 6 is a partially enlarged view of a battery module according to another embodiment of the present disclosures.

As illustrated in FIG. 6, a temperature sensor may include a first temperature sensor 250a in contact with a first region of an outermost battery cell 100 and a second temperature sensor 250b in contact with a second region of the outermost battery cell 100. The first temperature sensor 250a and the second temperature sensor 250b may be connected to a first board 210 through a temperature sensor connector 251.

The first region may be a region of the outermost battery cell 100 having a highest average temperature. The outermost battery cell 100 may internally have a temperature distribution. When the outermost battery cell 100 is divided into a plurality of regions, a region having a highest average temperature may be the first region.

The first region may be in the vicinity of an upper edge of the outermost battery cell 100, and the first temperature sensor 250a may be provided to be in contact with the outermost battery cell 100 in the vicinity of the upper edge of the outermost battery cell 100, and may measure maximum temperature of the outermost battery cell 100.

The second region may be a region of the outermost battery cell 100 having a lowest average temperature. The outermost battery cell 100 may internally have a temperature distribution. When the outermost battery cell 100 is divided into a plurality of regions, a region having a lowest average temperature may be the second region.

The second region may be in the vicinity of a lower central portion of the outermost battery cell 100, and the second temperature sensor 250b may be provided to be in contact with the outermost battery cell 100 in the vicinity of the lower central portion of the outermost battery cell 100, and may measure maximum temperature of the outermost battery cell 100. In this disclosure, measuring maximum temperature may mean that, the highest values of among the temperature values each measured by the first temperature sensor 250a and the second temperature sensor 250b are used as effective values. However, this is not limited by the present disclosures.

A battery module (10 in FIG. 5) may be cooled using a water cooling method at a lower portion of the battery cell 100. Accordingly, an upper portion of the battery module (10 in FIG. 5) may exhibit high-temperature characteristics, and a lower portion of the battery module (10 in FIG. 5) may exhibit low-temperature characteristics. Accordingly, the first temperature sensor 250a may be attached to an upper portion of the outermost battery cell 100 and the second temperature sensor 250b may be attached to a lower portion of the outermost battery cell 100 to measure temperature of the battery cell 100.

In an embodiment, the temperature sensor 250 may be provided as a negative temperature coefficient (NTC) thermistor measuring temperature through a resistance change. According such a configuration, it is possible to secure a structure advantageous for application to a structure in which a plurality of battery cells 100 and a plurality of plate members 310 are closely disposed, and to sensitively respond to various temperature changes.

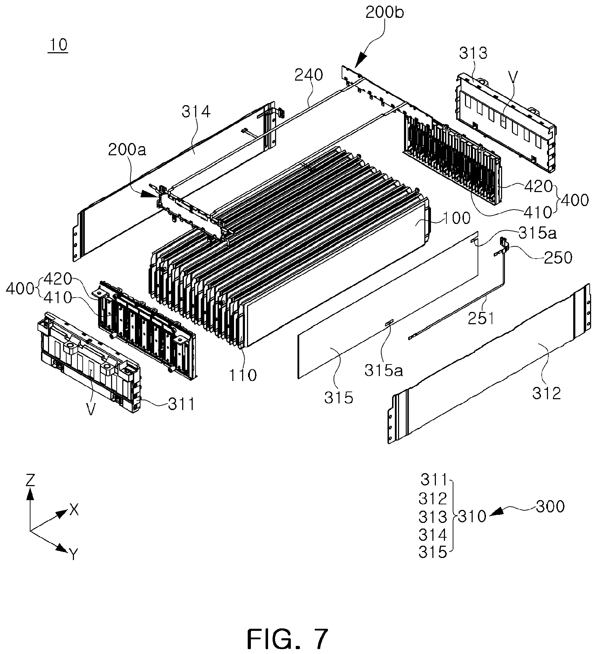

FIG. 7 is an exploded perspective view of a battery module 10 according to another embodiment of the present disclosures.

As illustrated in FIG. 7, in another embodiment of the present disclosures, a plate member 310 may further include an auxiliary plate 315. The auxiliary plate 315 may be present between an internal surface of a second plate member 312 and an outermost battery cell 100, and may oppose a temperature sensor 250. The auxiliary plate 315 may include at least one temperature measurement hole 315a in a position opposing the temperature sensor 250. The temperature measurement hole 315a, a hole passing through the auxiliary plate 315, may expose the temperature sensor 250 in a direction of the outermost battery cell 100.

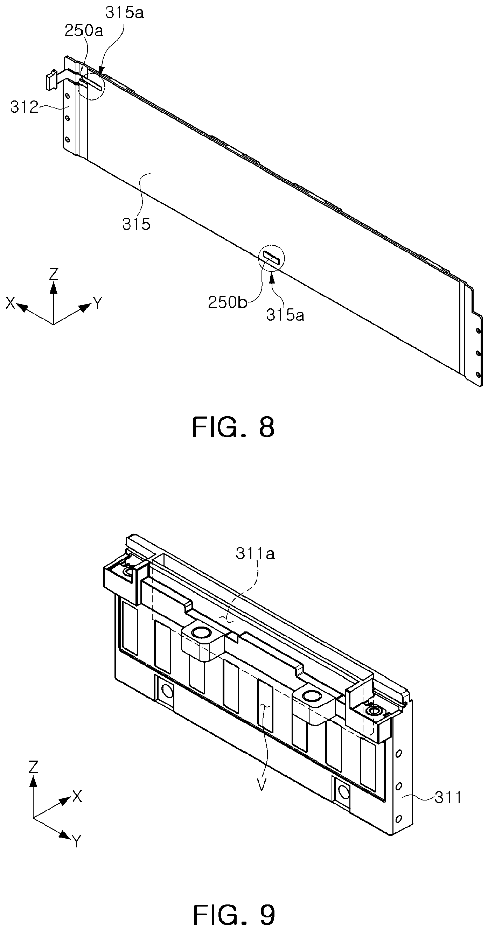

FIG. 8 is a perspective view of an auxiliary plate 315 and a second plate member 312 according to an embodiment of the present disclosures.

As illustrated in FIG. 8, the auxiliary plate 315 may be fixed to an internal surface of the second plate member 312 using a bolt, an adhesive, or the like.

The auxiliary plate 315 may include a plurality of temperature measurement holes 315a. In an embodiment, the auxiliary plate 315 may include one temperature measurement hole 315a in a position opposing a first temperature sensor (250a in FIG. 6), and another temperature measurement hole 315a in a position opposing a second temperature sensor (250b in FIG. 6). Accordingly, the first temperature sensor (250a in FIG. 6) and the second temperature sensor (250b in FIG. 6) may be exposed to the outside of the auxiliary plate 315 to easily measure temperature of an outermost battery cell (100 in FIG. 6) .

FIG. 9 is a perspective view of a first plate member 311 according to an embodiment of the present disclosures.

As illustrated in FIG. 9, the first plate member 311 may have a plurality of venting holes V, through-holes. As described above, the venting hole V may be a passage for discharging venting gas. The number and specifications of the venting holes V may be appropriately selected and applied according to the specifications and use environments of a battery module (10 in FIG. 5).

The first plate member 311 may have an accommodation groove 311a and an entrance 311b, connecting the accommodation groove 311a to the outside of the first plate member 311, therein. A first cell monitoring portion (200a in FIG. 5) may be accommodated in the accommodation groove 311a. The first cell monitoring portion (200a in FIG. 5) may be allowed to be accommodated in the accommodation groove 311a, thereby protecting the first cell monitoring portion (200a in FIG. 5) from external impacts, and preventing the first cell monitoring portion (200a in FIG. 200a) from being damaged.

The entrance 311b may be used as a passage for accommodating the first cell monitoring portion (200a in FIG. 5) in the accommodation groove 311a or extracting the first cell monitoring portion (200a in FIG. 5) from the accommodation groove 311a.

An accommodation groove and an entrance may be provided in a third plate member (313 in FIG. 4). A second cell monitoring portion (200b in FIG. 5) may be allowed to be accommodated in the accommodation groove of the third plate member (313 in FIG. 4) or the second cell monitoring portion (200b in FIG. 5) may be allowed to be extracted from the accommodation groove.

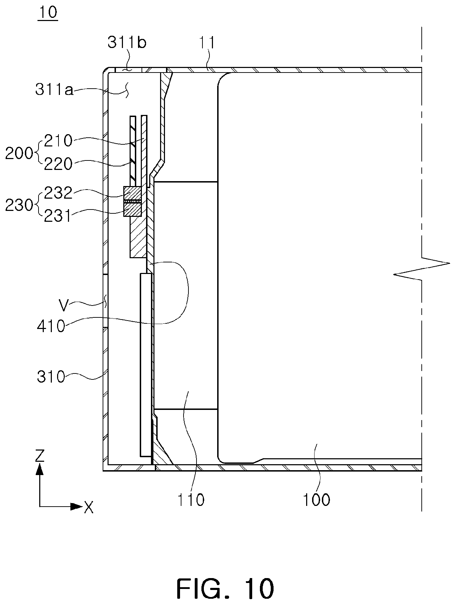

FIG. 10 illustrates the interior of a first plate member 311 and a module housing 11.

As illustrated in FIG. 10, a first board 210, a second board 220 and a connector 230 may be present in an accommodation groove 311a of the first plate member 311. The first board 210 may be connected to a connection member 240, and the second board 220 may be provided to be attachable to and detachable from the first board 210.

The second board 220 may be attached to and detached from the first board 210 in a height direction of a battery cell (100 in FIG. 5), that is, a Z-axis direction, and maybe separated from the first board 210 in the Z-axis direction to be extracted to the outside of the accommodation groove 311a. According to such a configuration, the second board 220 may be easily separated from a battery module (10 in FIG. 5) without disassembling the battery module (10 in FIG. 5).

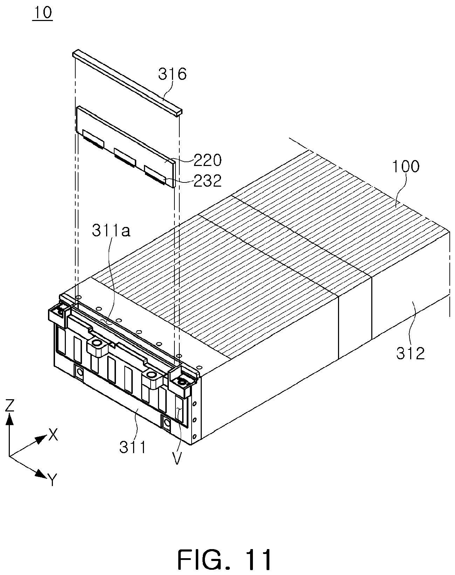

FIG. 11 is a partially exploded perspective view of a battery module 10 according to another embodiment of the present disclosures.

As illustrated in FIG. 11, a cover member 316, covering an accommodation groove 311a, may be provided on an upper portion of the first plate member 311.

The cover member 316 may cover the accommodation groove 311a in normal conditions to disconnect a first board (210 in FIG. 10) and a second board (220 in FIG. 10) from the outside, and may be separated from the first plate member 311 during a maintenance or replacement operation of the second board (220 in FIG. 10) to form a passage through which the second board (220 in FIG. 10) is extracted from the first plate member 311.

The cover member 316 may be provided in a form of being inserted into the accommodation groove 311a or in a form of being coupled to the first plate member 311 in a hinged manner and moving from the first plate member 311 in a rotating manner. However, such a configuration is not necessarily limited by the present disclosures.

At least a portion of a surface of the cover member 316, parallel to an X-Y plane, may be provided to be transparent. According to such a configuration, an internal state of the accommodation groove 311a may be monitored without separating the cover member 316 from the first plate member 311.

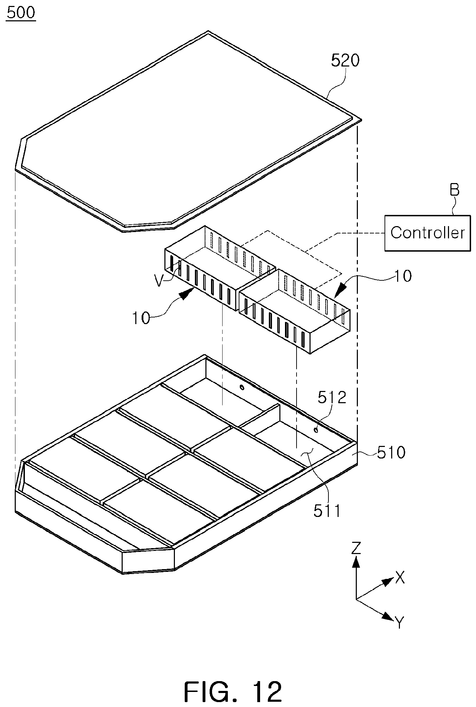

FIG. 12 is a partially exploded perspective view of a battery pack 500 according to an embodiment of the present disclosures.

As illustrated in FIG. 12, the battery pack 500 according to an embodiment of the present disclosures may include a pack housing 510 having an accommodation space 511 and a plurality of battery modules 10 disposed in the pack housing 510.

The plurality of battery modules 10 may be connected to a controller B, respectively. The controller B may be provided to receive temperature, current, and voltage data of a battery cell (100 in FIG. 5) from a second board (220 in FIG. 10) of the battery module 10, and to transmit a control signal capable of controlling temperature, current and voltage of the battery cell (100 in FIG. 5).

In the accommodation space 511, the plurality of battery modules 10 may be isolated from each other by a barrier wall member. The barrier wall member may serve to block the propagation or transfer of flames or fire between the battery modules 10.

At least one pack venting hole 512 may be provided in the pack housing 510. The pack venting hole 512 may serve to discharge venting gas, discharged from a venting hole V of the battery module 10, to the outside of the battery pack 500.

In an embodiment of the present disclosures, a pack cover member 520 may be provided on an upper portion of the pack housing 510. The pack cover member 520 may serve to protect the battery module 10 in normal conditions, and may prevent flames generated in the battery pack 500 from being transferred or propagated to the outside of the battery pack 500 in the event of a fire, contributing to ensuring user safety in an electric vehicle (EV) equipped with the battery pack 500.

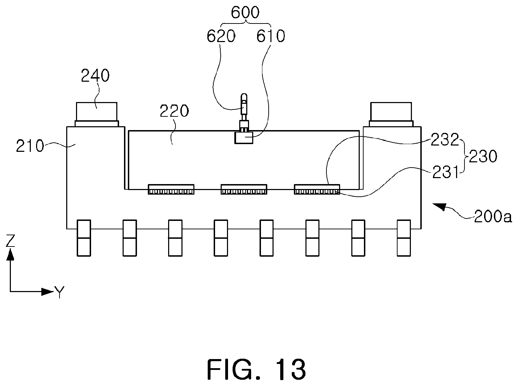

FIG. 13 is a front view of a first cell monitoring portion 200a applied to a battery pack (500 in FIG. 12) according to an embodiment of the present disclosures.

As illustrated in FIG. 13, the battery pack (500 in FIG. 12) may include a wireless communication portion 600 connected to the first cell monitoring portion 200a, receiving, from the first cell monitoring portion 200a, information on at least one of temperature, current, and voltage of a battery cell, and transmitting the information to the controller (B in FIG. 12) .

In another embodiment of the present disclosures, the wireless communication portion 600 may also be connected to a second cell monitoring portion (200b in FIG. 7), and may connect the second cell monitoring portion (200b in FIG. 7) and the controller (B in FIG. 12) to each other. However, hereinafter, the description will be provided based on the first cell monitoring portion 200a, and the following description may be applied to the second cell monitoring portion (200b in FIG. 7) in the same manner.

The wireless communication portion 600 may be connected to the first cell monitoring portion 200a, and may include a wireless chipset 610, receiving the information from the first cell monitoring portion 200a, and an antenna 620, connected to the wireless chipset 610 and transmitting the information to the controller (B in FIG. 12).

The wireless chipset 610 may be connected to a second board 220 by welding or an adhesive or a bolt or the like, and the antenna 620, amplifying and transmitting a signal stored in the wireless chipset 610, may be connected to the wireless chipset 610.

In an embodiment, a chip antenna, a pole antenna, or the like may be applied to the antenna 620. However, such a configuration not necessarily limited by the present disclosures, and may be appropriately selected and applied according to the specifications and use environments of the battery pack (500 in FIG. 12).

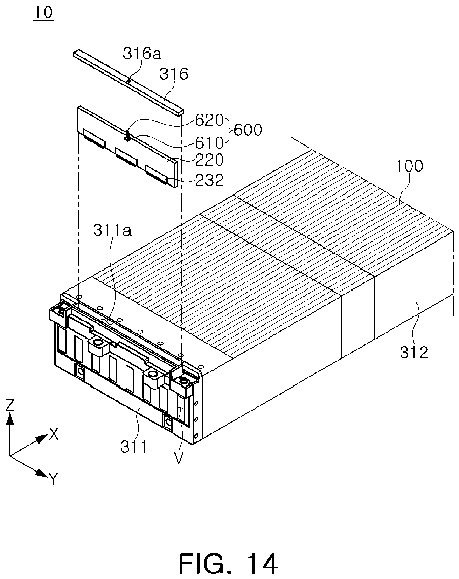

FIG. 14 is a partially exploded perspective view of a battery module 10 applied to a battery pack (500 in FIG. 12) according to another embodiment of the present disclosures.

As illustrated in FIG. 14, in another embodiment of the present disclosures, an antenna hole 316a may be provided in a cover member 316 applied to the battery module 10. The antenna hole 316a, a hole passing through the cover member 316 in a Z-axis direction, may serve to expose at least a portion of an antenna (620 in FIG. 13) to the outside of the cover member 316. According to such a configuration, wireless communication of the battery pack may be easily performed.

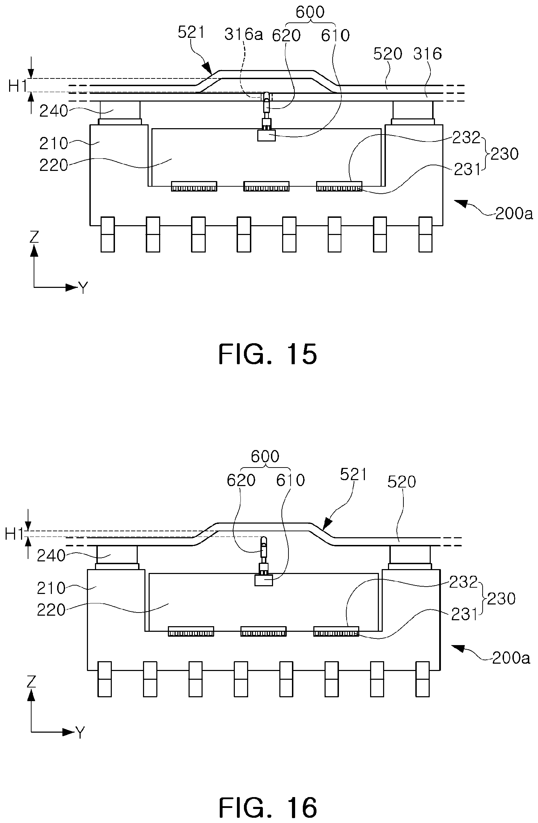

FIG. 15 is a front view of a portion of a battery pack (500 in FIG. 12) according to another embodiment of the present disclosures.

As illustrated in FIG. 15, at least a portion of an antenna 620 may be present in an antenna hole 316a of a cover member 316, and a pack cover member 520 may be in close contact with an upper portion of the cover member 316 in a +Z-direction.

In an embodiment, the pack cover member 520 may include a protruding region 521 protruding to a predetermined height in the +Z-direction. An internal surface of the pack cover member 520 having the protruding region 521 may not be in contact with the cover member 316. According to such a configuration, a predetermined space may be secured between the pack cover member 520 and the antenna 620, and this space may be an empty space and used as a space for wireless communication of the battery pack (500 in FIG. 12).

In addition, in an embodiment, the pack cover member 520 and an end of the antenna 620 may be spaced apart from each other by a first height H1, and the first height H1 may be at least 5 mm. According to such a configuration, wireless communication may be easily performed while a volume of the battery pack (500 in FIG. 12) is minimized.

FIG. 16 is a front view of a portion of a battery pack (500 in FIG. 12) according to another embodiment of the present disclosures.

As illustrated in FIG. 16, when a cover member 316 is not present, only a pack cover member 520 may cover an upper portion of a first cell monitoring portion 200a.

In this case, an internal surface of a protruding region 521 of the pack cover member 520 may be spaced apart from an end of an antenna 620, and the pack cover member 520 may not be in contact with the antenna 620. In this case, as described above, the pack cover member 520 and the end of the antenna 620 may be spaced apart from each other by a first height H1, and the first height H1 may be at least 5 mm. According to such a configuration, wireless communication may be easily performed while a volume of the battery pack (500 in FIG. 12) is minimized, contributing to lightening the battery pack (500 in FIG. 12) and increasing energy density of the battery pack (500 in FIG. 12) .

## Claims

1. A battery module comprising:
a plurality of battery cells; and
a cell monitoring portion connected to the plurality of battery cells, the cell monitoring portion including a plurality of boards collecting information on at least one of temperature, current, and voltage of the plurality of battery cells,
wherein the plurality of boards are separable.

2. The battery module of claim 1, wherein the plurality of boards are configured to be attachable to and detachable from each other.

3. The battery module of any of claims 1 or 2, wherein
the cell monitoring portion includes:
a first board connected to the plurality of battery cells, the first board collecting information on at least one of temperature, current, and voltage of the plurality of battery cells; and
a second board connected to the first board, the second board transmitting information received from the first board to a controller,
wherein the second board is configured to be attachable to and detachable from the first board in a direction, parallel to the first board.

4. The battery module of claim 3, wherein the cell monitoring portion further includes a connector connecting the first board and the second board to each other,
wherein the connector includes:
a first connector connected to the first board; and
a second connector connected to the second board,
wherein the first connector and the second connector are coupled to each other in an insertion coupling with fit tolerance.

5. The battery module of any of claims 3 or 4, further comprising:
a case accommodating the plurality of battery cells, the first board, and the second board,
wherein the case includes:
an accommodation groove in which the first board and the second board are accommodated;
an entrance connecting the accommodation groove to the outside of the case, and
at least one plate member covering the plurality of battery cells, and
wherein at least one of the first board and the second board is provided to be extracted through the entrance, and
the accommodation groove and the entrance are formed in the plate member

6. The battery module of claim 5, wherein the plate member further includes a temperature sensor disposed on one surface of the plate member opposing an outermost battery cell of the plurality of battery cells, the temperature sensor measuring temperature of the outermost battery cell.

7. The battery module of claim 6, wherein the temperature sensor includes:
a first temperature sensor in contact with a first region of the outermost battery cell; and
a second temperature sensor in contact with a second region of the outermost battery cell,
wherein
the first region is a region of the outermost battery cell having a highest average temperature, and
the second region is a region of the outermost battery cell having a lowest average temperature

8. The battery module of claim 6, wherein
the plate member further includes a temperature measurement hole formed as a through-hole, and
the temperature sensor is disposed to oppose the temperature measurement hole and is exposed in a direction of the battery cell.

9. The battery module of any of claims 5 to 8, wherein the plate member further includes a cover member covering the accommodation groove.

10. The battery module of any of claims 5 to 9, further comprising:
a busbar assembly disposed between the plate member and an electrode lead of each of the plurality of battery cells,
wherein the busbar assembly is connected to the electrode lead and the first board.

11. A battery pack comprising:
a pack housing; and
a battery module disposed in the pack housing, the battery module including a plurality of battery cells and a cell monitoring portion connected to the plurality of battery cells, the cell monitoring portion including a plurality of boards collecting information on at least one of temperature, current, and voltage of the plurality of battery cells,
wherein the plurality of boards are separable, preferably the battery module is a battery module according to any of claims 2 to 10.

12. The battery pack of claim 11, further comprising:
a wireless communication portion disposed in the pack housing, the wireless communication portion connecting the cell monitoring portion and a controller, the controller receiving the information collected by the cell monitoring portion.

13. The battery pack of claim 12, wherein the wireless communication portion includes:
a wireless chipset connected to the cell monitoring portion, the wireless chipset receiving the information from the cell monitoring portion; and
an antenna connected to the wireless chipset, the antenna transmitting the information to the controller.

14. The battery pack of any of claims 12 or 13, further comprising:
a pack cover member connected to the pack housing, the pack cover member covering the battery module,
wherein the pack cover member includes a protruding region protruding in a direction away from the wireless communication portion, and
wherein an internal surface of the protruding region is present is spaced apart from the battery module

15. The battery pack of claim 13, further comprising: an antenna hole formed in a case accommodating the plurality of battery cells, the cell monitoring portion, and the wireless communication portion, the antenna hole exposing at least a portion of the antenna to the outside of the case.
